## Europäisches Patentamt
## European Patent Office
## Office européen des brevets

(11) Publication number: **0 047 147**
**B1**

(12) **EUROPEAN PATENT SPECIFICATION**

(45) Date of publication of patent specification: **05.12.84**

(21) Application number: **81303940.1**

(22) Date of filing: **27.08.81**

(51) Int. Cl.³: **F 16 K 5/06**

(54) Improvements in or relating to fluid control valves.

(30) Priority: **29.08.80 GB 8028092**

(43) Date of publication of application:
**10.03.82 Bulletin 82/10**

(45) Publication of the grant of the patent:
**05.12.84 Bulletin 84/49**

(84) Designated Contracting States:
**AT BE CH DE FR IT LI NL SE**

(56) References cited:
**DE-A-2 444 716**
**DE-A-2 636 158**
**DE-B-1 650 611**
**DE-B-2 361 332**
**GB-A-2 030 270**

(73) Proprietor: **WORCESTER CONTROLS (U.K.) LIMITED**
**Burrell Road**
**Haywards Heath Sussex RH16 1TL (GB)**

(72) Inventor: **Prince, Brian Edward**
**50 Stroma Gardens Horsebridge**
**Hailsham Sussex (GB)**

(74) Representative: **Cole, Paul Gilbert et al**
**Hughes Clark Andrews & Byrne 63 Lincoln's Inn Fields**
**London WC2A 3JU (GB)**

Courier Press, Leamington Spa, England.

## Description

This invention relates to fluid control valves and more particularly to valves of the kind comprising a plug rotatable in contact with sealing members surrounding the ports in a valve casing.

In such valves one requirement is that the plug should be rotatable without undue operating torques being required, notwithstanding the provision of satisfactory fluidtight seals between the plug and the sealing members surrounding the valve ports, and under various conditions of operation.

Another requirement is that in conditions of varying temperature and/or ambient pressure, the buildup of catastrophic pressures in the cavity of the valve body in which the plug is located, and in the interior of the plug itself, must be avoided. Similarly the pressure in that cavity should not fall appreciably below the line pressure on the upstream side of the plug.

U.K. Patent Specification No. 1354260 describes a valve or stopcock for fluids where the ball of a rotary spherical plug valve is sealed to the valve body on the inlet and the outlet side by an annular plastics seat backed by a normally flat spring steel washer. Each washer is seated in a recess in the body which is relieved to give it some freedom to flex in response to line or cavity pressure. But the radially outer margin of the seat is held in a groove in the valve body so that the periphery of the seat forms a seal in the valve body and the seat is not free to move axially within the valve body. The result is that equalisation of pressure between upstream fluid and the fluid in the plug cavity to maintain the cavity at upstream line pressure does not take place. Both upstream and downstream seats maintain contact with the plug and contribute to the torque needed to operate the valve.

U.S. Patents Nos. 3677514 (Mencarelli), 3281112 (Walker) and 2942840 (Clade) show both valves having spring washers associated with the seats but the structural arrangements, purposes and end results are different from the present invention.

In U.K. Specification No. 1582407 there are described ball plug valve seat constructions of the kind to which this invention is applicable. This invention is, however, concerned with a different arrangement of sealing members surrounding the upstream and downstream ports of such a valve.

This invention has for its object to provide a seal assembly in which equalisation of pressure between the supply line and the cavity in the valve body can take place, preferably in either direction.

The invention is of particular application to valves in which the rotatable plug is of a substantially spherical shape, sometimes called ball plug valves, although the plug need not necessarily be truly spherical but may be, say, of ovoidal shape. It will therefore be described in relation to ball plug valves.

According to this invention, a fluid control valve assembly comprises a body having a body cavity, said body cavity having an inlet port and an outlet port connecting with said cavity for connection to an input line and an output line respectively, a plug located within said body cavity and having a through passage affording a flow path between said inlet port and said outlet port when said plug is set into the "open" position of the valve, at least one of said ports being surrounded by a seating recess, a seat member located in said seating recess, said seat member having a sealing surface adapted to engage the surface of said plug and form sealing contact therewith and a radial outer surface, a radial spring washer backing the radial outer surface of said seat member and a bearing ring supporting the outer margin of said spring washer out of contact with the radial wall of said seating recess, the assembly being so dimensioned that said spring washer is stressed by said plug to an intermediate state of concavity whereby movement of said plug under the effects of pressure within a system controlled by said valve can take place on either side of a mean position corresponding to said intermediate state of concavity, said spring washer urging said seat member into contact with said plug while permitting equalisation of pressures between the body cavity and the line feeding said port.

In its preferred form the plug of a valve according to the invention is a ball plug.

According to a preferred feature of the invention the seat member in an assembly such that the above defined is free to flex with said spring washer and to permit the formation of a flow path around its outer circumferential surface for the equalisation of pressure between said body cavity and the line feeding said port.

According to a further preferred feature of the invention the bearing ring which supports the outer margin of said spring washer is of deformable material adapted to form a fluidtight seal between itself and said spring washer. It may be recessed into a wall of said seating recess. Preferably, moreover, said bearing ring is profiled to present an edge spaced radially inwardly from the outer circumferential wall of said seating recess said edge providing a sealing contact with said spring washer over a line spaced inwardly from the outer circumference of said washer, said washer being fulcrummed on said edge when stressed by pressure from said plug.

According to the invention in its preferred form said spring washer is substantially planar in its unstressed condition. Preferably it is substantially radially coextensive with the radial face of said seat member which it contacts.

The seat member is preferably provided with pressure relief channels spaced around its outer circumferential surface.

The invention will be better understood from the following description of an embodiment thereof given with reference to the accompanying drawings, in which:

Figure 1 shows in cross-section a ball plug valve of the kind to which this invention relates;

Figure 2 is a fragmentary cross-section of a ball plug seating recess with the components assembled therein in their condition prior to application of a fluid load;

Figure 3 shows a cross-section similar to that of Figure 2 on the up stream side of the valve under load; and Figure 4 is a similar cross-section of the assembly on the downstream side of the valve under load.

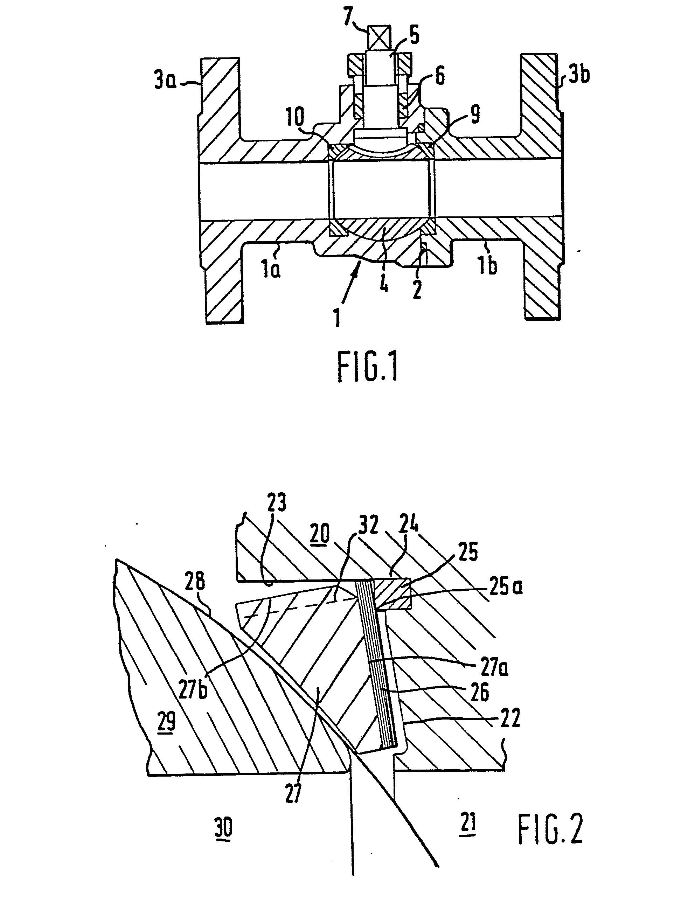

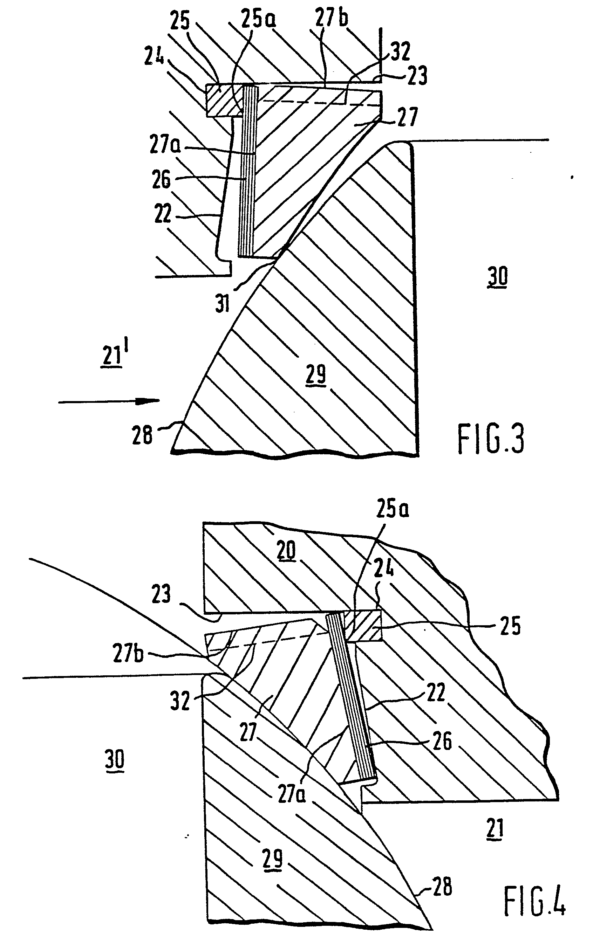

Referring first to Figure 1, the ball plug valve shown comprises a body 1 comprising two sections 1a and 1b bolted together, a sealing ring 2 providing a fluid-tight joint between them. Each of the body parts has a connecting flange 3a and 3b respectively by which the valve may be connected into a pipeline which it is to control. Within the body cavity there is a ball plug 4 which is engaged by an operating shaft 5.

The inner end of shaft 5 has a flat end engaging in a slot in the ball plug 4 and enables the ball plug to be turned while leaving the ball floating within the body cavity. The shaft 5 passes through a gland 6 and terminates outside the valve cavity in a squared end 7 by which it may be operated upon to turn the valve on or off. Other profiles can of course be used to provide a drive coupling at this outer end. The ball plug 4 is seated between sealing rings 9 and 10 each of which surrounds one of the ports affording a fluid path through the valve. The valve is shown in the open position, that is to say with the passageway through the ball plug in line with the bores through body portions 1a and 1b. When the valve is turned to the off position the ball presents a blank face to the upstream bore (say through part 1a) and pressure of the line fluid on that face forces the ball into firm contact with the sealing ring on the downstream side of the ball, in this case 9. The cavity in which the ball is located, that is to say the space in and around the ball, is not exposed to the line pressure since the cavity is also sealed against the ball on the upstream side by sealing ring 10. If therefore the pressure in the cavity is to be equalised to that of the pressure in the supply line provision must be made for excess pressure in the cavity to be relieved passed the sealing ring to line or *vice versa*.

Referring now to Figures 2, 3 and 4, these show on a larger scale in cross-section the assembly in the seating recess of a ball valve according to the invention. It will be appreciated that the recess, the seat member spring washer and bearing ring are in fact circular and surround the ports with which they are associated, only the section on one side of the centre line or axis thereof being shown since the arrangement is symmetrical.

A fragment of the valve body surrounding the seating recess is shown at 20. The outlet port from the valve body is shown at 21. The seating recess has a profiled radial wall 22 extending generally radially outwardly from the axis of port 21 and an outer circumferential wall 23. At the junction of walls 22 and 23 a counter-recess 24 is formed within which the bearing ring 25 is located. The bearing ring 25 is shown rectangular in cross-section so as to present a free edge 25a to the back surface of a spring washer 26. The edge 25a is arranged, by the dimensioning of the assembly, to stand proud of the radial wall 22 of the seating recess and radially inwardly of the outer circumferential wall 23.

The other face of spring washer 26 lies against the outer radial face of the seat member 27. The seat member 27 is made conventionally of deformable plastics material such a PTFE (polytetrafluoroethylene) and has a front face profiled to mate substantially with the spherical surface 28 of the ball plug 29, only a fragment of which is shown. The bore through the ball plug is shown at 30.

In the relaxed condition of the seat assembly, the seat member 27 has a planar back surface 27a and a cylindrical outer circumferential surface 27b; the spring washer 26 is planar and is dimensioned to match the radial dimension of seat member 27 so that the whole of the back surface of seat member 27 is supported by the washer 26.

When the valve is assembled and the parts of the body are brought together the ball plug embeds into the seat-washer assembly 27, 26, flexing the washer into the conical configuration as shown in Figure 2. The seat member flexes with it. In this condition the washer 26 seats against the edge 25a of the bearing ring 25 and fulcrums upon it. It follows that the stiffness of the spring characteristic afforded by washer 26 is determined in part by the radial dimension of bearing ring 25 and hence the length of the lever arm against which the ball plug bears on the radially inward side of this fulcrum. In this condition moreover, it will be seen that the spring washer 26 is still clear of the radial wall 22 of the seating recess which is profiled to provide an appropriate amount of relief to accommodate further movement of the washer. Similarly the front face of the seat member 27 is not fully in contact with the surface of the ball plug.

When the valve is connected in a fluid pipe line and turned to the "off" position the pressure of the fluid on the up-stream side of the ball plug displaces the ball plug towards the down-stream seat and produces the situation depicted in Figure 4. In this view it will be seen that the ball 29 is now fully engaged with the sealing surface of the seat member 27 and the spring washer has been further flexed until it is in contact at its inner edge with the radial wall 22 of the seating recess. Furthermore, the washer 26 beds onto the edge 25a of the bearing ring 25, which latter is made of conformable material such as PTFE and forms a fluid-tight seal against cavity pressure at that point. The firm fluid-tight seal is thus formed on the down-stream side of the valve.

The situation on the up stream side is shown in Figure 3. By virtue of the prestressing applied to the washer 26 and seat member 27 on assembling the valve, the seat member is retained in contact with the ball plug surface at the radially inner edge of the seat member. However, if the pressure in the cavity rises above that in the up-stream line 21', the seat member 27 can lift against the pressure of spring washer 26 and leakage takes place at the inner edge 31 of the seat member to equalise the pressure, since there is clearance behind the spring washer to allow such movements. If, on the other hand, the line pressure in supply line 21' rises above that in the cavity this will operate to separate the washer 26 from engagement with the bearing ring 25 and a leakage path is then formed around the outer circumferential edges of washer 26 and seat member 27 to connect the line to the body cavity and equalise the pressures. This action can be facilitated by the provision of grooves or channels distributed around the circumference of the seat member as indicated in dotted lines in the drawings at 32 (see also U.K. Patent Specification No. 1582407).

It will be understood that the pressure inequalities referred to above can arise from various causes. For example, if the line in which the valve is connected carries a volatile liquid such as crude oil and the valve is exposed to extremes of temperature such as are encountered in sub-tropical desert areas, then if the valve is shut off, say, during the night, the rise in temperature during the daylight hours following can generate high pressure in the valve cavity. Such pressures can be enough to burst the valve if measures are not taken as herein described to relieve the pressure. Similarly the effect can be met when gases are involved but owing to the greater compressibility of gases the problem is not so great.

Again, in normal ball plug valves, if there is no pressure in the line upstream of the valve and the ball plug is therefore held centrally within the body cavity which is full of fluid, increasing cavity pressure tends to force the soft seat materials tightly between the ball plug and the body, thus forming an even tigher seal between the cavity and the line, thus making the relief of cavity pressure more difficult or impossible. The seat member according to the invention avoids these effects.

The operation of the seat arrangements according to the invention is dependent upon the seat member being free to flex with the spring washer in the manner described and forms of seat member having flanges clamped between the valve body parts are not appropriate in these arrangements.

It will however be appreciated that the construction herein described lends itself to economical manufacture particularly if the spring washer 26 is made as a simple planar washer. Additionally the arrangement calls for no constant high pressures between ball plug and seats such as might be found necessary with less flexible arrangements so that operating torques are kept at reasonable levels.

**Claims**

1. A fluid control valve assembly comprising a body having a body cavity, said body cavity having an inlet port and an outlet port connecting with said cavity for connection to an input line and an output line respectively, a plug located within said body cavity and having a through passage affording a flow path between said inlet port and said outlet port when said plug is set into the "open" position of the valve, at least one of said ports being surrounded by a seating recess, a seat member located in said seating recess, said seat member having a sealing surface adapted to engage the surface of said plug and form sealing contact therewith and a radial outer surface, and a radial spring washer (26) backing the radial out surface of said seat member (27), characterised in that there is provided a bearing ring (25) supporting the outer margin of said spring washer (26) out of contact with the radial wall (22) of said seating recess, the assembly being so dimensioned that said spring washer (26) is stressed by said plug (28) to an intermediate state of concavity whereby movement of said plug (29) under the effects of pressure within a system controlled by said valve can take place on either side of a mean position corresponding to said intermediate state of concavity, said spring washer (26) urging said seat member (27) into contact with said plug (29) while permitting equalisation of pressures between the body cavity and the line feeding said port.

2. A fluid control valve assembly according to Claim 1, wherein the plug of the valve is a ball plug.

3. A fluid control valve assembly according to Claim 1 or 2, wherein the seat member (27) is free to flex with said spring washer (26) and to permit the formation of a flow path around its outer circumferential surface for the equalisation of pressure between said body cavity and the line feeding said port.

4. A fluid control valve assembly according to Claim 1, 2 or 3, wherein the bearing ring (25) which supports the outer margin of said spring washer is of deformable material adapted to form a fluid-tight seal between itself and said spring washer.

5. A fluid control valve assembly according to Claim 4, wherein said bearing ring (25) is recessed into a wall of said seating recess.

6. A fluid control valve assembly according to Claim 5, wherein said bearing ring (25) is profiled to present an edge (25a) spaced radially inwardly from the outer circumferential wall (23) of said seating recess, said edge (25a) providing a sealing contact with said spring washer (26) over a line spaced inwardly from the outer circumference of said washer, said washer being fulcrummed on said edge when stressed by pressure from said plug (29).

7. A fluid control valve assembly according to any preceding claim, wherein said spring washer (26) is substantially planar in its unstressed condition.

8. A fluid control valve assembly according to any preceding claim, wherein said spring washer (26) is substantially radially coextensive with the radial face of said seat member (27) which it contacts.

9. A fluid control valve assembly according to Claim 8, wherein the seat member is provided with pressure relief channels (27b) spaced around its outer circumferential surface.

**Revendications**

1. Valve de commande de fluide comprenant un corps comportant une cavité, cette cavité comportant une lumière d'entrée et une lumière de sortie communiquant avec la cavité en vue d'être raccordées à une conduite d'admission et à une conduite d'évacuation respectivement, une noix placée dans la cavité du corps et présentant un passage de traversée qui fournit un trajet d'écoulement entre la lumière d'entrée et la lumière de sortie lorsque la noix se trouve dans la position "d'ouverture" de la valve, au moins une des lumières étant entourée par un évidement formant siège, un siège placé dans l'évidement formant siège, ce siège comportant une surface d'étanchéité propre à attaquer la surface de la noix et à établir un contact d'étanchéité avec celle-ci et une surface externe radiale, et une rondelle de ressort radiale (26) soutenant la surface externe radiale du siège (27), caractérisée en ce qu'elle comporte un anneau d'appui (25) supportant le bord extérieur de la rondelle de ressort (26) hors de contact d'avec la paroi radiale (22) de l'évidement formant siège, la valve étant dimensionnée de manière que la rondelle de ressort (26) soit mise sous contrainte par la noix (29) dans un état intermédiaire de concavité, de sorte que le déplacement de la noix (29) sous l'effet de la pression dans un système commandé par la valve peut s'effectuer de part et d'autre d'une position moyenne correspondant à l'état de concavité intermédiaire, la rondelle de ressort (26) sollicitant le siège (27) en contact avec la noix (29) tout en permettant une égalisation des pressions entre la cavité du corps et la conduite alimentant la lumière.

2. Valve de commande de fluide suivant la revendication 1, dans laquelle la noix de la valve est une noix sphérique.

3. Valve de commande de fluide suivant la revendication 1 ou 2, dans laquelle le siège (27) est libre de fléchir avec la rondelle de ressort (26) et de permettre la formation d'un trajet d'écoulement autour de sa surface circonférentielle externe pour égaliser les pressions entre la cavité du corps et la conduite alimentant la lumière.

4. Valve de commande de fluide suivant la revendication 1, 2 ou 3, dans laquelle l'anneau d'appui (25) qui soutient le bord extérieur de la rondelle de ressort est fait d'une matière déformable propre à former un joint étanche au fluide entre l'anneau et la rondelle de ressort.

5. Valve de commande de fluide suivant la revendication 4, dans laquelle l'anneau d'appui (25) est encastré dans une paroi de l'évidement formant siège.

6. Valve de commande de fluide suivant la revendication 5, dans laquelle l'anneau d'appui (25) est profilé de manière à présenter une arête (25a) espacée radialement vers l'intérieur de la paroi circonférentielle externe (23) de l'évidement formant siège, l'arête (25a) assurant un contact d'étanchéité avec la rondelle de ressort (26) suivant une ligne espacée vers l'intérieur de la circonférence externe de la rondelle, la rondelle prenant appui sur l'arête lorsqu'elle est mise sous contrainte par la pression exercée par la noix (29).

7. Valve de commande de fluide suivant l'une quelconque des revendications précédentes, dans laquelle la rondelle de ressort (26) est en substance plane dans son état non sous contrainte.

8. Valve de commande de fluide suivant l'une quelconque des revendications précédentes, dans laquelle la rondelle de ressort (26) s'étend en substance radialement sur la même distance que la face radiale du siège (27) avec laquelle elle est en contact.

9. Valve de commande de fluide suivant la revendication 8, dans laquelle le siège est pourvu de canaux de relâchement de pression (27b) espacés tout autour de sa surface circonférentielle externe.

**Patentansprüche**

1. Fluid-Steuerventilanordnung mit einem Gehäuse und einem darin befindlichen Hohlraum mit einer Einlaßöffnung und einer Auslaßöffnung, die mit dem Hohlraum zur Verbindung mit einer Eingangsleitung und einer Ausgangsleitung entsprechend verbunden sind, einem Küken-Absperrorgan in dem Gehäusehohlraum mit einer Durchtrittsleitung, die einen Durchflußweg zwischen der Einlaßöffnung und der Auslaßöffnung in "Offen"-Stellung des Ventils bildet, wobei mindestens eine der Öffnungen von einer Sitzausnehmung umgeben ist, in der ein Sitzglied angeordnet ist, das eine Dichtfläche zum Eingriff mit der Fläche des Küken-Absperrorgans aufweist und einen Dichtkontakt damit und mit einer radialen Außenfläche bildet und mit einem radialen Federdichtring, der die radiale Außenfläche des Sitzgliedes abstützt, dadurch gekennzeichnet, daß ein Lagerring (25) den äußeren Rand des Federdichtrings (26) außer Kontakt mit der radialen Wandung (22) der Sitzausnehmung haltend abstützt, wobei die Anordnung derart dimensioniert ist, daß der Federdichtring (26) durch das Küken-Absperrorgan (29) in eine Zwischenstellung des Hohlraums gebracht wird, wobei eine Bewegung des Kükens (29) unter der Wirkung des Druckes im von dem Ventil gesteuerten System nach jeder Seite einer Mittelstellung stattfinden kann, entsprechend der Zwischenstellung des Hohlraumes, wobei der Federdichtring (26) das Sitzglied (27) in Kontakt mit dem Küken-Absperrorgan zwingt unter Ermöglichung eines Druckausgleiches zwischen dem Gehäusehohlraum und der die Öffnung speisenden Leitung.

2. Fluid-Steuerventilanordnung nach Anspruch 1, dadurch gekennzeichnet, daß das Küken-Absperrorgan ein Kugel-Küken ist.

3. Fluid-Steuerventilanordnung nach Anspruch 1 oder 2, dadurch gekennzeichnet, daß das Sitzglied (27) mit dem Federdichtring (26) unter Bildung eines Fließweges um dessen äußere Umfangsfläche zwecks Druckausgleichs zwischen dem Gehäusehohlraum und der die betreffende Öffnung speisenden Leitung frei bieg- bzw. schwenkbar ist.

4. Fluid-Steuerventilanordnung nach Anspruch 1, oder 3, dadurch gekennzeichnet, daß der Lagerring (25), der den äußeren Rand des Federdichtrings abstützt, aus deformierbarem Material besteht, das zur Bildung einer fluiddichten Dichtung zwischen ihm selbst und dem Federdichtring geeignet ist.

5. Fluid-Steuerventilanordnung nach Anspruch 4, dadurch gekennzeichnet, daß der Lagerring (25) in einer Wandung der Sitzausnehmung aufgenommen ist.

6. Fluid-Steuerventilanordnung nach Anspruch 5, dadurch gekennzeichnet, daß der Lagerring (25) derart profiliert ist, um eine Kante (25a) zu bilden, die radialen Abstand einwärts von der äußeren Umfangswandung (23) der Sitzausnehmung hat, wobei die Kante (25a) einen Dichtkontakt mit dem Federdichtring (26) über eine Linie vorsieht, die nach innen Abstand von dem äußeren Umfang des Dichtringes aufweist, derart, daß der Dichtring um diese Kante schwenkt, wenn er durch Druck von dem Küken-Absperrorgan (29) beaufschlagt ist.

7. Fluid-Steuerventilanordnung nach einem der vorhergehenden Ansprüche, dadurch gekennzeichnet, daß der Federdichtring (26) in seinem unbeanspruchten Zustand im wesentlichen eben ausgebildet ist.

8. Fluid-Steuerventilanordnung nach einem der vorhergehenden Ansprüche, dadurch gekennzeichnet, daß der Federdichtring (26) im wesentlichen radial gleichgerichtet mit der radialen Fläche des Sitzgliedes (27) ist, welche er berührt.

9. Fluid-Steuerventilanordnung nach Anspruch 8, dadurch gekennzeichnet, daß das Sitzglied mit Druckentspannungskanälen (27b) versehen ist, die mit Abstand voneinander an seiner äußeren Umfangsfläche vorgesehen sind.

FIG.1

FIG.2

FIG.3

FIG.4